# FASCICULE DE BREVET EUROPEEN

(11) **EP 3 715 185 B1**
(45) Date de publication et mention de la délivrance du brevet: **10.11.2021**
(21) Numéro de dépôt: 20161697.6
(22) Date de dépôt: 09.03.2020
(51) Int. Cl.: B60R 21/02, B60R 5/00

(54) **DISPOSITIF DE SÉPARATION POUR UN VÉHICULE AUTOMOBILE**
TRENNVORRICHTUNG FÜR EIN KRAFTFAHRZEUG
SEPARATING DEVICE FOR A MOTOR VEHICLE

(30) Priorité: 25.03.2019 FR 1903050
(43) Date de publication de la demande: 30.09.2020
(73) Titulaire: RENAULT S.A.S., 92100 Boulogne-Billancourt (FR)
(72) Inventeur: COLIN, Thierry, 28500 CHERISY (FR); MAGINOT, Olivier, 78084 Guyancourt (FR)

(56) Documents cités:
- FR-A1- 2 692 861
- FR-A1- 2 982 812
- FR-A1- 2 987 791
- FR-A1- 3 045 535
- FR-A1- 3 051 416
- US-A1- 2014 028 043

## Description

### Domaine Technique de l'invention

L'invention concerne un dispositif de séparation pour un véhicule automobile, le dispositif de séparation étant apte à séparer un habitacle d'un espace de chargement du véhicule. L'invention concerne également un véhicule automobile comprenant un tel dispositif de séparation.

### Etat de la technique antérieure

Les véhicules automobiles, et en particulier les véhicules utilitaires, comprennent généralement un habitacle dans lequel sont installés le conducteur et éventuellement des passagers, et un espace de chargement. L'espace de chargement est généralement positionné à l'arrière de l'habitacle. Il permet de transporter une cargaison quelconque. Pour rendre les véhicules plus pratiques, les constructeurs automobiles cherchent à offrir le plus grand volume possible pour l'espace de chargement. Parallèlement à cet objectif, le véhicule doit également pouvoir transporter, au moins occasionnellement, des passagers en plus du conducteur. Par ailleurs, pour protéger les passagers et/ou le conducteur d'un véhicule, il est connu d'utiliser une cloison de séparation entre l'habitacle et l'espace de chargement.

Pour augmenter la capacité de chargement d'un véhicule, on connaît par la publication FR3051416 l'utilisation d'une cloison de séparation pivotante. Une telle cloison permet de faire communiquer l'habitacle avec l'espace de chargement. On bénéficie ainsi d'un volume de chargement augmenté, utilisable en absence de passagers. Toutefois, l'utilisation d'une telle cloison pivotante peut s'avérer complexe à manipuler et peut gêner la conduite du conducteur du véhicule ou limiter l'accessibilité de l'habitacle.

Le pivotement de la cloison peut donc être limité pour ne pas gêner le conducteur mais alors le gain en volume de chargement est également limité.

### Présentation de l'invention

Le but de l'invention est de fournir un dispositif de séparation améliorant les dispositifs de séparation connus de l'art antérieur.

Plus précisément, un premier objet de l'invention est un dispositif de séparation permettant conserver un champ de vision optimal pour le conducteur même lorsque le dispositif de séparation est dans une configuration visant à augmenter le volume de l'espace de chargement.

Un deuxième objet de l'invention est un dispositif de séparation simple à manipuler et à utiliser.

Un troisième objet de l'invention est un dispositif de séparation robuste et simple à fabriquer.

### Résumé de l'invention

L'invention se rapporte à un dispositif de séparation pour un véhicule automobile, le véhicule comprenant un espace de chargement et un habitacle, le dispositif de séparation comprenant un bâti, une cloison mobile par rapport au bâti, et un volet mobile par rapport à la cloison, le bâti étant destiné à être fixé à une caisse d'un véhicule, le dispositif de séparation étant mobile entre une première configuration et une deuxième configuration, la cloison et le volet s'étendant côte-à-côte et parallèlement à un premier plan lorsque le dispositif de séparation est dans sa première configuration, ledit premier plan étant destiné à être orienté perpendiculairement à un axe longitudinal d'un véhicule pour séparer un habitacle d'un espace de chargement, la cloison s'étendant parallèlement à un deuxième plan lorsque le dispositif de séparation est dans sa deuxième configuration, ledit deuxième plan étant destiné à s'étendre perpendiculairement à un axe transversal d'un véhicule et le long d'un côté latéral d'un conducteur d'un véhicule pour faire communiquer au moins une partie d'un habitacle avec un espace de chargement, le volet étant escamoté pour dégager un champ de vision d'un conducteur lorsque le dispositif de séparation est dans sa deuxième configuration.

Le volet peut être escamoté pour dégager un champ de vision d'un rétroviseur latéral du véhicule lorsque le dispositif de séparation est dans sa deuxième configuration.

Le bâti peut comprendre une cloison fixe, la cloison fixe étant destinée à s'étendre dans un plan orienté perpendiculairement à un axe longitudinal d'un véhicule, la cloison fixe étant destinée à être positionnée derrière un siège conducteur d'un véhicule.

Le volet peut être destiné à être orienté perpendiculairement à un axe longitudinal d'un véhicule lorsque le dispositif de séparation est dans sa deuxième configuration, et lorsque le dispositif de séparation est dans toute configuration intermédiaire entre sa première configuration et sa deuxième configuration.

Le dispositif de séparation peut comprendre un mécanisme de synchronisation configuré de sorte que lorsque la cloison est déplacée d'une position correspondant à la première configuration du dispositif de séparation vers une position correspondant à la deuxième configuration du dispositif de séparation, le volet s'escamote automatiquement, et lorsque la cloison est déplacée d'une position correspondant à la deuxième configuration du dispositif de séparation vers une position correspondant à la première configuration du dispositif de séparation, le volet s'étend automatiquement dans le prolongement de la cloison.

Le dispositif de séparation peut comprendre un premier moyen de liaison en rotation autour d'un premier axe, la cloison étant mobile vers l'avant entre la première configuration et la deuxième configuration selon une rotation autour du premier axe, et il peut comprendre un deuxième moyen de liaison en rotation autour d'un deuxième axe, le volet étant mobile entre la première configuration et la deuxième configuration selon une rotation autour du deuxième axe, le premier axe et le deuxième axe étant destinés à être orientés parallèlement à un axe vertical d'un véhicule, la cloison étant apte pivoter d'un quart de tour dans un premier sens de rotation lorsque le dispositif de séparation passe de la première configuration à la deuxième configuration, et le volet peut être apte à pivoter d'un quart de tour dans un deuxième sens de rotation lorsque le dispositif de séparation passe de la première configuration à la deuxième configuration, le deuxième sens de rotation étant opposé au premier sens de rotation.

Le mécanisme de synchronisation peut comprendre une bielle s'étendant sensiblement parallèlement à la cloison, un troisième moyen de liaison en rotation autour d'un troisième axe et un quatrième moyen de liaison en rotation autour d'un quatrième axe, le troisième axe et le quatrième axe étant destinés à être orientés parallèlement à un axe vertical d'un véhicule, la bielle comprenant une première extrémité liée au volet par le troisième moyen de liaison en rotation et une deuxième extrémité liée au bâti par le quatrième moyen de liaison en rotation.

Le mécanisme de synchronisation peut comprendre une première roue d'entraînement fixée au bâti, une deuxième roue d'entraînement fixée au volet, la première roue d'entraînement étant agencée autour du premier axe et la deuxième roue d'entraînement étant agencée autour du deuxième axe, et un anneau de transmission, notamment une courroie ou une chaîne, coopérant avec la première roue d'entraînement et la deuxième roue d'entraînement.

Le mécanisme de synchronisation peut comprendre un câble comprenant une première extrémité fixée au bâti ou destinée à être fixée à une caisse d'un véhicule et une deuxième extrémité fixée au volet, et le mécanisme de synchronisation peut comprendre un moyen de rappel, la tension du câble étant apte à faire pivoter le volet selon un premier sens de rotation, le moyen de rappel étant apte à faire pivoter le volet selon un deuxième sens de rotation, opposé au premier sens de rotation.

L'invention se rapporte également à un véhicule automobile comprenant un dispositif de séparation tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue schématique d'un véhicule automobile comprenant un dispositif de séparation selon un mode de réalisation de l'invention, le dispositif de séparation étant dans une première configuration.
[Fig. 2] La figure 2 est une vue schématique du véhicule automobile, le dispositif de séparation étant dans une deuxième configuration.
[Fig. 3] La figure 3 est une vue schématique en perspective du dispositif de séparation des figures 1 et 2, dans les première et deuxième configurations.
[Fig. 4] La figure 4 est une vue schématique de dessus d'un premier mode de réalisation d'un mécanisme de synchronisation du dispositif de séparation, le dispositif de séparation étant dans une première configuration.
[Fig. 5] La figure 5 est une vue schématique de dessus du premier mode de réalisation du mécanisme de synchronisation, le dispositif de séparation étant dans une deuxième configuration.
[Fig. 6] La figure 6 est une vue schématique de dessus d'un deuxième mode de réalisation d'un mécanisme de synchronisation du dispositif de séparation, le dispositif de séparation étant dans une première configuration.
[Fig. 7] La figure 7 est une vue schématique de dessus du deuxième mode de réalisation du mécanisme de synchronisation, le dispositif de séparation étant dans une deuxième configuration.
[Fig. 8] La figure 8 est une vue schématique en perspective et de derrière d'un troisième mode de réalisation d'un mécanisme de synchronisation du dispositif de séparation, le dispositif de séparation étant dans une première configuration.
[Fig. 9] La figure 9 est une première vue partielle du troisième mode de réalisation du mécanisme de synchronisation.
[Fig. 10] La figure 10 est une vue en perspective et de devant du troisième mode de réalisation du mécanisme de synchronisation, le dispositif de séparation étant dans la première configuration.
[Fig. 11] La figure 11 est une deuxième vue partielle du troisième mode de réalisation du mécanisme de synchronisation.

### Description détaillée

Dans ce document, l'axe X désigne l'axe longitudinal d'un véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule. L'axe Z désigne l'axe perpendiculaire à l'axe X et à l'axe Y. L'axe Z est un axe vertical lorsque le véhicule repose sur un sol horizontal. L'axe Z est orienté de bas en haut. Les axes X, Y et Z forment un repère orthogonal. Ce même repère, défini par référence à un véhicule, sera aussi utilisé pour un dispositif de séparation, même considéré hors du véhicule, puisqu'il est destiné à un montage selon une orientation spécifique sur un véhicule. De plus, on considère que le véhicule repose sur un sol horizontal.

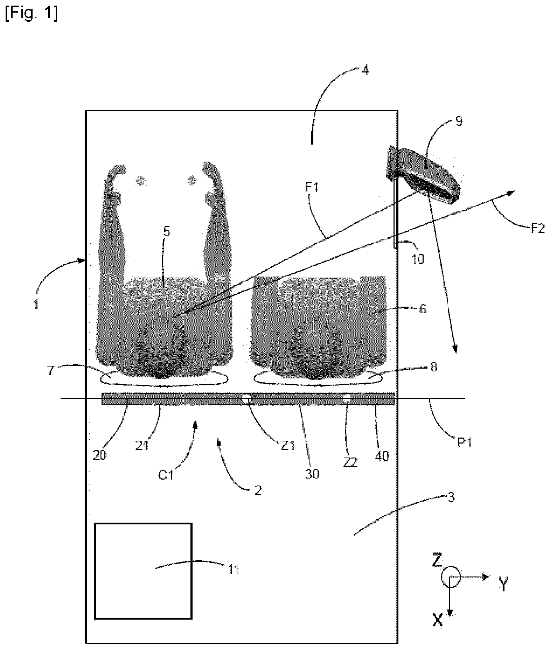

La figure 1 illustre schématiquement un véhicule 1 automobile équipé d'un dispositif de séparation 2 selon un mode de réalisation de l'invention. Le véhicule 1 peut être de toute nature. Notamment, il peut être par exemple un véhicule particulier, un véhicule utilitaire, un camion ou un bus. En particulier, le véhicule 1 est un véhicule utile pour le transport d'une cargaison quelconque.

Le véhicule 1 comprend un espace de chargement 3 et un habitacle 4. L'espace de chargement 3 est un espace du véhicule dans lequel une cargaison 11, 11' peut être déposée. L'habitacle 4 est un espace du véhicule, distinct de l'espace de chargement dans lequel un conducteur 5 et un passager 6 peuvent prendre place. L'habitacle 4 comprend donc un siège conducteur 7 et un siège passager 8. Dans les différents modes de réalisations présentés, le conducteur est à gauche. L'invention pourrait toutefois être transposée pour un véhicule avec poste de conduite à droite. L'habitacle, pourrait également comprendre davantage de sièges. Par exemple, le véhicule pourrait comprendre deux sièges passagers côte-à-côte à l'avant.

Le véhicule 1 comprend en outre une caisse formant une structure du véhicule contre laquelle sont fixés différents éléments, notamment les sièges 7, 8 et le dispositif de séparation 2. Le véhicule 1 comprend également un rétroviseur 9 droit, c'est- à-dire un rétroviseur positionné du côté opposé au côté du conducteur. Le rétroviseur est un miroir permettant d'observer des obstacles ou d'autres véhicules positionnés vers l'arrière et du côté droit du véhicule. Comme illustré sur la figure 1, le rétroviseur 9 est dans le champ de vision du conducteur 5. Il est visible au travers d'une vitre latérale 10 du véhicule.

Le dispositif de séparation 2 comprend un bâti 20, une cloison 30 mobile par rapport au bâti 20, et un volet 40 mobile par rapport à la cloison 30. La cloison 30 est un panneau s'étendant dans un plan. Elle est articulée par rapport au bâti 20. Le volet 40 est également un panneau s'étendant dans un plan et il est articulé par rapport à la cloison 30. Le bâti 20, la cloison 30 et le volet 40 sont des éléments distincts les uns des autres, ils peuvent être fabriqués par exemple en métal, notamment à partir d'une plaque de tôle, ou en plastique.

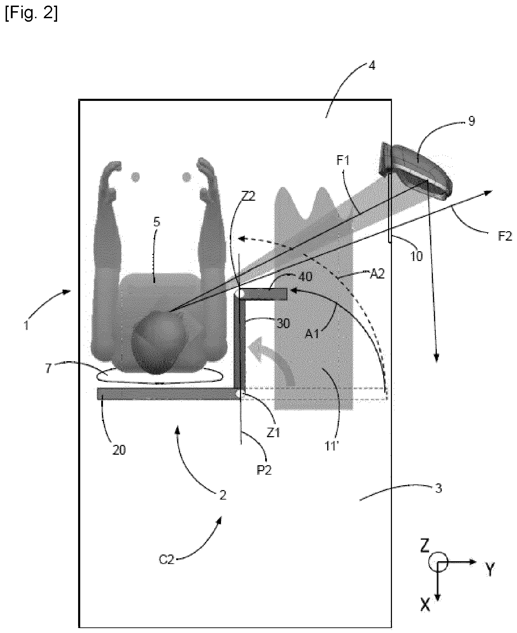

Le dispositif de séparation est mobile, ou autrement dit articulé, entre une première configuration C1, illustrée sur la figure 1, et une deuxième configuration C2, illustrée sur la figure 2. Dans la première configuration C1, la cloison 30 et le volet 40 s'étendent côte-à-côte et parallèlement à un premier plan P1. Le bâti 20 s'étend également dans le premier plan P1, à gauche de la cloison 30. Le premier plan P1 est orienté perpendiculairement à l'axe longitudinal X du véhicule. Dans cette configuration, le dispositif de séparation sépare l'habitacle 4 de l'espace de chargement 3. L'habitacle 4 est à l'avant du dispositif de séparation 2 et l'espace de chargement 3 est à l'arrière du dispositif de séparation 2. Avantageusement, le dispositif de séparation s'étend sur toute la largeur et sur toute la hauteur de l'intérieur du véhicule. De petits interstices peuvent néanmoins exister au sein du dispositif de séparation ou entre le dispositif de séparation et des parois latérales, un plancher ou un plafond du véhicule. Le dispositif de séparation est donc un dispositif visant à protéger le conducteur 5 et ses passagers 6 d'un éventuel choc avec la cargaison 11. En effet, la cargaison 11 contenue dans l'espace de chargement 3 peut ne pas être maintenue fermement. Cette cargaison peut donc se déplacer au gré des accélérations subies par le véhicule et éventuellement heurter le dispositif de séparation 2.

Comme illustré sur la figure 2, lorsque le dispositif de séparation 2 est dans sa deuxième configuration C2, la cloison s'étend parallèlement à un deuxième plan P2, perpendiculaire à l'axe transversal Y du véhicule. La cloison s'étend alors le long d'un côté latéral droit du conducteur 5. Cette disposition permet de faire communiquer la partie droite de l'habitacle 4 avec l'espace de chargement 3. La partie de l'habitacle 3 dédiée aux passagers peut donc être utilisée pour le chargement d'une cargaison 11' particulièrement longue. La cargaison 11' peut être par exemple des planches, des barres ou des tubes dont la longueur est supérieure à celle de l'espace de chargement 3 lorsque le dispositif de séparation est dans la première configuration C1. Avantageusement, un dossier du siège passager 8 peut être rabattu lorsque le dispositif de séparation 2 est dans la deuxième configuration C2.

Dans la deuxième configuration C2, le volet 40 est escamoté pour dégager un champ de vision d'un conducteur et pour lui laisser un accès au moins partiel à la partie droite de l'habitacle. Autrement dit, le volet 40 est déplacé et soustrait à la vue du conducteur pour ne pas entraver son champ de vision. En particulier, le volet 40 est escamoté pour dégager le champ de vision du conducteur en direction du rétroviseur 9 latéral. A une position donnée de la cloison 30, correspond une unique position du volet 40. Notamment, le volet 40 ne peut pas être escamoté lorsque la cloison est dans une position correspondant à la première configuration. De même, le volet 40 ne peut pas être orienté dans le prolongement de la cloison 30 lorsque la cloison 30 est dans une position correspondant à la deuxième configuration.

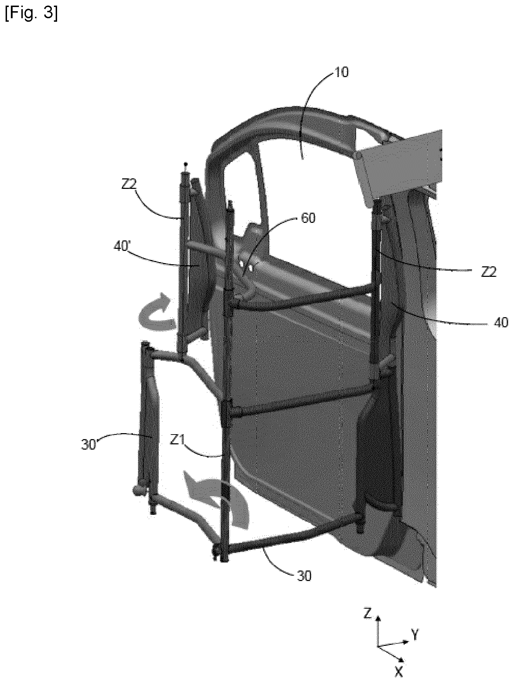

Sur la figure 3, le dispositif de séparation est illustré dans une première configuration C1 avec la cloison 30 et le volet 40 et dans une deuxième configuration C2 avec la cloison 30' et le volet 40'. Ces deux configurations sont donc superposées sur la figure 3.

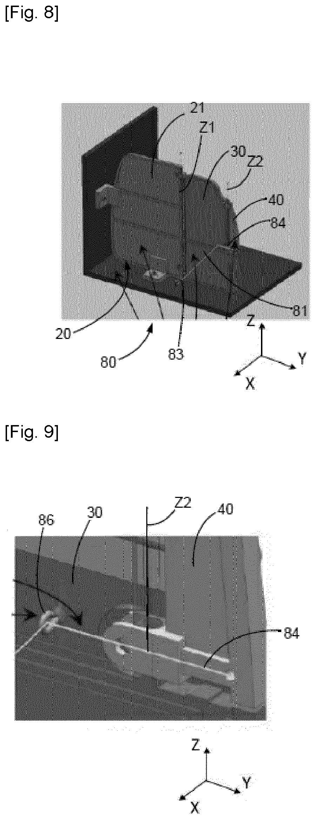

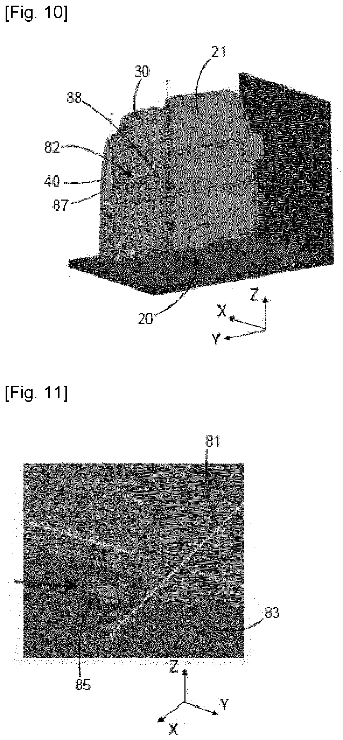

Le bâti 20 est un élément fixé, directement ou indirectement, à la caisse du véhicule. Le bâti 20 est donc un élément immobile par rapport au véhicule 1. Selon le mode de réalisation illustré, notamment sur les figures 8 et 10, le bâti 20 comprend une cloison fixe 21, s'étendant dans un plan perpendiculaire à l'axe longitudinal X. Notamment la cloison fixe peut s'étendre sur une moitié gauche du véhicule, derrière le siège conducteur 7. En variante, le bâti pourrait comprendre uniquement une structure aérée, apte à supporter la cloison 30, la séparation entre l'espace de chargement et l'habitacle sur le côté gauche étant par exemple assurée par le dossier du siège conducteur 7.

Le dispositif de séparation comprend en outre un premier moyen de liaison en rotation autour d'un premier axe Z1 et un deuxième moyen de liaison en rotation autour d'un deuxième axe Z2. Le premier axe Z1 et le deuxième axe Z2 sont tous les deux parallèles à l'axe vertical Z.

Lorsque le dispositif de séparation passe de la première configuration C1 à la deuxième configuration C2, d'une part la cloison 30 pivote vers l'avant du véhicule 1 selon une rotation d'un quart de tour autour du premier axe Z1 (dans le sens antihoraire selon une vue de dessus), et d'autre part, le volet 40 pivote par rapport à la cloison 30 selon une rotation d'un quart de tour autour du deuxième axe Z2 (dans le sens horaire selon une vue de dessus). Le volet 40 pivote donc dans selon un sens de rotation opposé au sens de rotation de la cloison 30. Lorsque le dispositif de séparation passe de la deuxième configuration C2 à la première configuration C1, la cloison et le volet 40 pivotent respectivement dans des sens opposés.

Le volet 40 demeure donc perpendiculaire à l'axe longitudinal X tout au long de la transition entre la première configuration C1 et la deuxième configuration C2. Autrement dit, le volet est orienté perpendiculairement à l'axe longitudinal X lorsque le dispositif de séparation est dans sa première configuration C1, lorsque le dispositif de séparation est dans sa deuxième configuration C2, et lorsque le dispositif de séparation est dans toute configuration intermédiaire entre sa première configuration et sa deuxième configuration. Ainsi, le volet 40 subi un mouvement de translation le long d'un arc de cercle dessiné par une flèche A1 en trait plein sur la figure 2. Si le volet 40 devait être pivoté seulement après avoir fait pivoter la cloison 30, alors l'extrémité du volet décrirait l'arc de cercle représenté par une flèche A2 en pointillés sur la figure 2. Dans un tel cas, le volet 40 balayerait un volume plus important dans la partie droite de l'habitacle. La conception de l'habitacle devrait alors tenir compte d'un volume libre plus important pour permettre le pivotement de la cloison avec son volet. De même, si le volet devait être pivoté avant le pivotement de la cloison, un volume libre dans l'espace de chargement serait nécessaire. Ainsi, en synchronisant le pivotement du volet avec le pivotement de la cloison, on limite le volume balayé par l'ensemble formé par la cloison et le volet au cours de la transition entre la première configuration C1 et la deuxième configuration C2 et inversement. On évite ainsi tout risque de contact entre le volet et un élément fixe du véhicule.

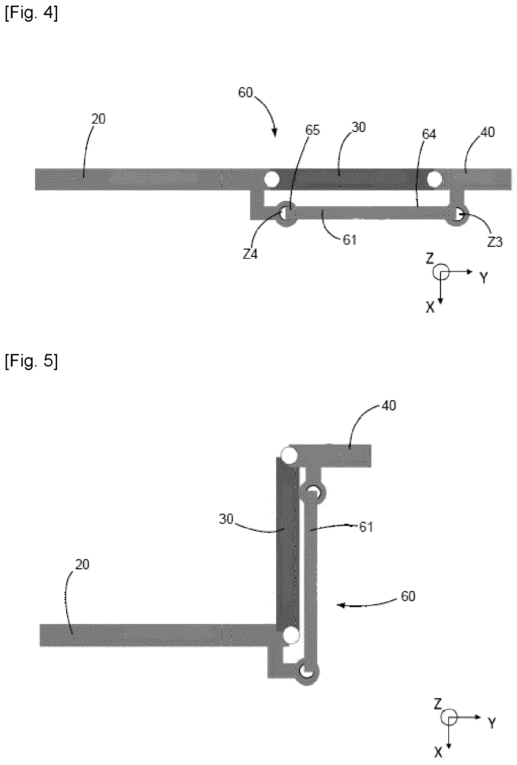

Le dispositif de séparation 2 comprend donc un mécanisme de synchronisation 60, 70, 80 configuré de sorte que, lorsque la cloison 30 est déplacée d'une position correspondant à la première configuration C1 vers une position correspondant à la deuxième configuration C2, le volet 40 s'escamote automatiquement. Réversiblement, lorsque la cloison est déplacée d'une position correspondant à la deuxième configuration C2 vers une position correspondant à la première configuration C1, le volet 40 s'étend automatiquement dans le prolongement de la cloison 30. Les figures 4 à 11 illustrent trois modes de réalisation du mécanisme de synchronisation 60, 70, 80.

Selon un premier mode de réalisation, illustré sur les figures 4 et 5, le mécanisme de synchronisation 60 comprend une bielle 61 s'étendant sensiblement parallèlement à la cloison 30, et notamment perpendiculairement à l'axe vertical Z. Le mécanisme de synchronisation 60 comprend également un troisième moyen de liaison en rotation autour d'un troisième axe Z3 et un quatrième moyen de liaison en rotation autour d'un quatrième axe Z4, le troisième axe Z3 et le quatrième axe Z4 étant orientés parallèlement à l'axe vertical Z. La bielle comprend une première extrémité 64 liée au volet 40 par le troisième moyen de liaison en rotation et une deuxième extrémité 65 liée au bâti 20 par le quatrième moyen de liaison en rotation. Lorsque la cloison est pivotée d'un quart de tour entre les deux configurations C1, C2, la bielle 61 exerce un effort sur le volet 40, ce qui le fait pivoter autour du deuxième axe Z2, également d'un quart de tour, mais dans le sens opposé au sens de pivotement de la cloison.

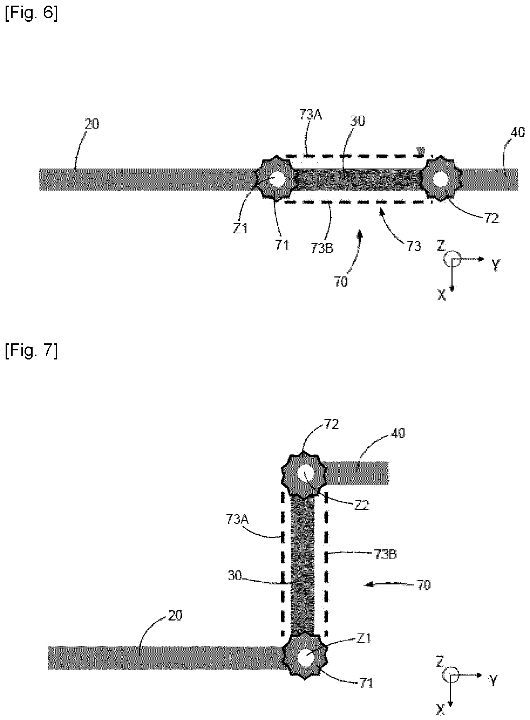

Selon un deuxième mode de réalisation, illustré sur les figures 6 et 7, le mécanisme de synchronisation 70 comprend une première roue d'entraînement 71 fixée au bâti 20 et une deuxième roue d'entraînement 72 fixée au volet 40. La première roue d'entraînement 71 est agencée autour du premier axe Z1 et la deuxième roue d'entraînement 72 est agencée autour du deuxième axe 72. Le mécanisme de synchronisation 60 comprend également un anneau de transmission 73 coopérant avec la première roue d'entraînement 71 et la deuxième roue d'entraînement 72. En particulier, les deux roues d'entrainement 71, 72 peuvent être des roues dentées et l'anneau de transmission 73 peut être une chaîne. En variante, les deux roues d'entrainement 71, 72 peuvent être des poulies et l'anneau de transmission 73 peut être une courroie. L'anneau de transmission 73 comprend deux brins 73A, 73B reliant chacun la première roue d'entraînement à la deuxième roue d'entraînement. Les deux brins sont agencés de part et d'autre de la cloison 30. C'est à dire que lorsque le dispositif de séparation est dans sa première configuration C1, le premier brin 73A est dans l'habitacle tandis que le deuxième brin 73B est dans l'espace de chargement. Lorsqu'on fait pivoter la cloison d'un quart de tour de la première configuration à la deuxième configuration, le deuxième brin 73B se met en tension, ce qui exerce un couple de rotation sur la deuxième roue d'entraînement 73 et fait pivoter le volet dans le sens horaire par rapport à la cloison. Inversement, lorsqu'on fait pivoter la cloison d'un quart de tour de la deuxième configuration à la première configuration, le premier brin 73A se met en tension, ce qui exerce un couple de rotation sur la deuxième roue d'entraînement et fait pivoter le volet dans le sens antihoraire par rapport à la cloison.

Selon un troisième mode de réalisation, illustré sur les figures 8, 9, 10 et 11, le mécanisme de synchronisation 80 comprend un câble 81 et un moyen de rappel 82. Le câble 81 est un lien souple et résistant reliant le volet à une structure fixe au sein du véhicule. Le câble 81 comprend une première extrémité 83 fixée à la caisse et une deuxième extrémité 84 fixée au volet. Comme cela apparaît sur la figure 11, la première extrémité 83 du câble peut être fixée à la caisse grâce à une vis de fixation 85 vissée dans un élément de caisse, ou dans un élément lui-même fixé à la caisse du véhicule, par exemple le bâti 20. Avantageusement le mécanisme de synchronisation comprend également un ou plusieurs points de renvoi 86 permettant de guider le cheminement du câble. Ce ou ces points de renvoi peuvent se trouver sous la forme d'un œillet ou d'une poulie. Comme illustré sur la figure 9, une vis à œillet est fixée contre une paroi du volet 30. Grâce à ce point de renvoi, le câble produit sur le volet 40 un effort orienté perpendiculairement à l'axe de rotation Z2 du volet, ainsi la tension du câble peut plus facilement faire pivoter le volet. Le moyen de rappel 82, illustré sur la figure 10, peut se présenter sous la forme d'un moyen élastique agencé entre le volet et la cloison. Il maintient le câble 81 sous tension. Par exemple le moyen de rappel peut être un élastique annulaire coopérant avec un premier moyen de retenu 87 sur le volet et coopérant avec un deuxième moyen de retenu 88 sur le volet. Lorsqu'on fait pivoter la cloison 30 d'un quart de tour de la première configuration à la deuxième configuration, le câble 81 se met en tension et provoque la rotation du volet 40 dans le sens horaire par rapport à la cloison. Inversement, lorsqu'on fait pivoter la cloison d'un quart de tour de la deuxième configuration à la première configuration, le moyen de rappel 82 fait pivoter le volet 40 dans le sens antihoraire par rapport à la cloison. Selon le mode de réalisation présenté le câble est positionné du côté de l'espace de chargement et le moyen de rappel est positionné du côté habitacle mais ces positions pourraient être inversées. Le moyen de rappel, le câble, ou l'ensemble formé du moyen de rappel et du câble pourrait être utile pour faire pivoter le volet indifféremment vers sa position correspondant à la première configuration C1 ou vers sa position correspondant à la deuxième configuration C2.

Selon une variante de réalisation non représentée, le déplacement du volet par rapport à la cloison pourrait se faire non pas par un mouvement de rotation autour d'un axe vertical mais selon un mouvement de nature différente. Par exemple le volet pourrait être pivoté par rapport à la cloison autour d'un axe horizontal de la cloison. Ou encore, le volet pourrait être translaté vers le bas, vers le haut ou vers les côtés de la cloison. Le volet pourrait non pas être positionné à l'extrémité de la cloison comme cela est illustré sur les différentes figures mais coopérer avec une ouverture, ou une fenêtre pratique dans la cloison. La cloison peut également comprendre une épargne dans laquelle est agencée le volet. Par ailleurs la cloison pourrait également être mobile selon un mouvement différent de celui qui a été présenté. Notamment, l'axe Z1 pourrait être positionné à l'extrémité droite du véhicule et non entre le siège conducteur et le siège passager. Un mouvement de translation pourrait être associé au mouvement de rotation vers l'avant de la cloison.

Lorsqu'un objet particulièrement long doit être chargé dans le véhicule, on fait basculer le dispositif de séparation de la première configuration à la deuxième configuration. Pour ce faire, on peut simplement pousser ou tirer sur la cloison pour l'amener à la position voulue. Il n'est pas obligatoire de manipuler en plus le volet car celui-ci se déplace automatiquement en fonction de la position de la cloison. L'objet peut alors s'étendre dans la partie droite de l'habitacle. La cloison 30 s'étend le long du côté latéral droit du conducteur et continue donc à protéger le conducteur contre d'éventuels chocs avec des objets qui ne seraient pas bien fixés dans le véhicule.

Dans la deuxième configuration C2 du dispositif de séparation 2, le conducteur peut continuer à conduire avec la même aisance que dans la première configuration C1. Notamment, il peut observer régulièrement le rétroviseur 9 pour vérifier qu'aucun danger n'est présent du côté arrière droit du véhicule. La direction de son regard est alors illustrée par une première flèche F1. Il peut aussi regarder régulièrement par la vitre latérale 10 pour vérifier qu'aucun danger n'est présent du côté droit. La direction de son regard est alors illustrée par la deuxième flèche F2. D'une manière générale, le conducteur 5 peut observer régulièrement l'environnement du véhicule au travers des différentes surfaces vitrées du véhicule sans être gêné par le dispositif de séparation. Il peut également observer des indicateurs, notamment des témoins lumineux, pouvant s'afficher sur une partie droite du tableau de bord. Le conducteur 5 peut également saisir des objets positionnés du côté passager de l'habitacle, par exemple des objets rangés dans une boîte à gants ou dans une portière du côté du passager.

Grâce à l'invention, on dispose donc d'un véhicule dont on peut faire facilement varier la capacité de chargement. Le véhicule reste pratique à conduire en toute circonstance.

## Revendications

1. Véhicule automobile (1) comprenant un espace de chargement (3), un habitacle (4) dans lequel est disposé un siège conducteur (7) et un siège passager (8), et un dispositif de séparation (2), le dispositif de séparation comprend un bâti (20), une cloison (30) mobile par rapport au bâti, et un volet (40) mobile par rapport à la cloison, le bâti étant destiné à être fixé à une caisse d'un véhicule, le dispositif de séparation étant mobile entre une première configuration (C1) et une deuxième configuration (C2),
**caractérise en ce que**
la cloison et le volet s'étendent côte-à-côte et parallèlement à un premier plan (P1) lorsque le dispositif de séparation est dans sa première configuration, ledit premier plan étant destiné à être orienté perpendiculairement à un axe longitudinal (X) du véhicule pour séparer l'habitacle (4) de l'espace de chargement, la cloison s'étendant parallèlement à un deuxième plan (P2) lorsque le dispositif de séparation est dans sa deuxième configuration, ledit deuxième plan étant destiné à s'étendre perpendiculairement à un axe transversal (Y) du véhicule et le long d'un côté latéral du siège conducteur (7) pour faire communiquer au moins une partie de l'habitacle avec l'espace de chargement, le volet étant escamoté pour dégager un champ de vision d'un conducteur lorsque le dispositif de séparation est dans sa deuxième configuration.

2. Véhicule selon la revendication précédente, **caractérisé en ce que** le volet (40) est escamoté pour dégager un champ de vision d'un rétroviseur (9) latéral d'un véhicule lorsque le dispositif de séparation est dans sa deuxième configuration (C2).

3. Véhicule selon l'une des revendications précédentes, **caractérisé en ce que** le bâti (20) comprend une cloison fixe (21), la cloison fixe étant destinée à s'étendre dans un plan orienté perpendiculairement à un axe longitudinal (X) d'un véhicule, la cloison fixe étant destinée à être positionnée derrière le siège conducteur (7) d'un véhicule.

4. Véhicule selon l'une des revendications précédentes, **caractérisé en ce que** le volet (40) est destiné à être orienté perpendiculairement à un axe longitudinal (X) d'un véhicule lorsque le dispositif de séparation est dans sa deuxième configuration (C2), et lorsque le dispositif de séparation est dans toute configuration intermédiaire entre sa première configuration (C1) et sa deuxième configuration (C2).

5. Véhicule selon l'une des revendications précédentes, **caractérisé en ce qu'**il comprend un mécanisme de synchronisation (60, 70, 80) configuré de sorte que lorsque la cloison est déplacée d'une position correspondant à la première configuration du dispositif de séparation vers une position correspondant à la deuxième configuration du dispositif de séparation, le volet s'escamote automatiquement, et lorsque la cloison est déplacée d'une position correspondant à la deuxième configuration du dispositif de séparation vers une position correspondant à la première configuration du dispositif de séparation, le volet s'étend automatiquement dans le prolongement de la cloison.

6. Véhicule selon l'une des revendications précédentes, **caractérisé en ce qu'**il comprend un premier moyen de liaison en rotation autour d'un premier axe (Z1), la cloison étant mobile vers l'avant entre la première configuration et la deuxième configuration selon une rotation autour du premier axe, et **en ce qu'**il comprend un deuxième moyen de liaison en rotation autour d'un deuxième axe (Z2), le volet étant mobile entre la première configuration et la deuxième configuration selon une rotation autour du deuxième axe, le premier axe et le deuxième axe étant destinés à être orientés parallèlement à un axe vertical (Z) d'un véhicule, la cloison étant apte pivoter d'un quart de tour dans un premier sens de rotation lorsque le dispositif de séparation passe de la première configuration à la deuxième configuration, et **en ce que** le volet est apte à pivoter d'un quart de tour dans un deuxième sens de rotation lorsque le dispositif de séparation passe de la première configuration à la deuxième configuration, le deuxième sens de rotation étant opposé au premier sens de rotation.

7. Véhicule selon les revendications 5 et 6, **caractérisé en ce que** le mécanisme de synchronisation (60) comprend une bielle (61) s'étendant sensiblement parallèlement à la cloison, un troisième moyen de liaison en rotation autour d'un troisième axe (Z3) et un quatrième moyen de liaison en rotation autour d'un quatrième axe (Z4), le troisième axe et le quatrième axe étant destinés à être orientés parallèlement à un axe vertical (Z) d'un véhicule, la bielle comprenant une première extrémité (64) liée au volet par le troisième moyen de liaison en rotation et une deuxième extrémité (65) liée au bâti par le quatrième moyen de liaison en rotation.

8. Véhicule selon les revendications 5 et 6, **caractérisé en ce que** le mécanisme de synchronisation (70) comprend une première roue d'entraînement (71) fixée au bâti, une deuxième roue d'entraînement (72) fixée au volet, la première roue d'entraînement étant agencée autour du premier axe (Z1) et la deuxième roue d'entraînement étant agencée autour du deuxième axe (Z2), et un anneau de transmission (73), notamment une courroie ou une chaîne, coopérant avec la première roue d'entraînement et la deuxième roue d'entraînement.

9. Véhicule selon la revendication 5, **caractérisé en ce que** le mécanisme de synchronisation (80) comprend un câble (81) comprenant une première extrémité (83) fixée au bâti ou destinée à être fixée à une caisse d'un véhicule et une deuxième extrémité (84) fixée au volet, et **en ce que** le mécanisme de synchronisation comprend un moyen de rappel (82), la tension du câble étant apte à faire pivoter le volet selon un premier sens de rotation, le moyen de rappel étant apte à faire pivoter le volet selon un deuxième sens de rotation, opposé au premier sens de rotation.

## Patentansprüche

1. Kraftfahrzeug (1), welches einen Laderaum (3), einen Fahrgastraum (4), in welchem ein Fahrersitz (7) und ein Beifahrersitz (8) angeordnet sind, und eine Trennvorrichtung (2) umfasst, wobei die Trennvorrichtung ein Gestell (20), eine in Bezug auf das Gestell bewegliche Trennwand (30) und eine in Bezug auf die Trennwand bewegliche Klappe (40) umfasst, wobei das Gestell dazu bestimmt ist, an einer Karosserie eines Fahrzeugs befestigt zu werden, wobei die Trennvorrichtung zwischen einer ersten Konfiguration (C1) und einer zweiten Konfiguration (C2) beweglich ist,
**dadurch gekennzeichnet, dass** sich die Trennwand und die Klappe nebeneinander und parallel zu einer ersten Ebene (P1) erstrecken, wenn sich die Trennvorrichtung in ihrer ersten Konfiguration befindet, wobei die erste Ebene dazu bestimmt ist, senkrecht zu einer Längsachse (X) des Fahrzeugs ausgerichtet zu werden, um den Fahrgastraum (4) von dem Laderaum zu trennen, wobei sich die Trennwand parallel zu einer zweiten Ebene (P2) erstreckt, wenn sich die Trennvorrichtung in ihrer zweiten Konfiguration befindet, wobei die zweite Ebene dazu bestimmt ist, sich senkrecht zu einer Querachse (Y) des Fahrzeugs und entlang eines seitlichen Randes des Fahrersitzes (7) zu erstrecken, um eine Verbindung zwischen wenigstens einem Teil des Fahrgastraumes und dem Laderaum herzustellen, wobei die Klappe umgeklappt ist, um ein Sichtfeld eines Fahrers freizugeben, wenn sich die Trennvorrichtung in ihrer zweiten Konfiguration befindet.

2. Fahrzeug nach dem vorhergehenden Anspruch, **dadurch gekennzeichnet, dass** die Klappe (40) umgeklappt ist, um ein Sichtfeld eines Seitenrückspiegels (9) freizugeben, wenn sich die Trennvorrichtung in ihrer zweiten Konfiguration (C2) befindet.

3. Fahrzeug nach einem der vorhergehenden Ansprüche, **dadurch gekennzeichnet, dass** das Gestell (20) eine ortsfeste Trennwand (21) umfasst, wobei die ortsfeste Trennwand dazu bestimmt ist, sich in einer Ebene zu erstrecken, die senkrecht zu einer Längsachse (X) eines Fahrzeugs ausgerichtet ist, wobei die ortsfeste Trennwand dazu bestimmt ist, hinter dem Fahrersitz (7) eines Fahrzeugs positioniert zu werden.

4. Fahrzeug nach einem der vorhergehenden Ansprüche, **dadurch gekennzeichnet, dass** die Klappe (40) dazu bestimmt ist, senkrecht zu einer Längsachse (X) eines Fahrzeugs ausgerichtet zu werden, wenn sich die Trennvorrichtung in ihrer zweiten Konfiguration (C2) befindet und wenn sich die Trennvorrichtung in einer beliebigen Zwischenkonfiguration zwischen ihrer ersten Konfiguration (C1) und ihrer zweiten Konfiguration (C2) befindet.

5. Fahrzeug nach einem der vorhergehenden Ansprüche, **dadurch gekennzeichnet, dass** es einen Synchronisationsmechanismus (60, 70, 80) umfasst, der so ausgebildet ist, dass, wenn die Trennwand von einer Position, die der ersten Konfiguration der Trennvorrichtung entspricht, in eine Position, die der zweiten Konfiguration der Trennvorrichtung entspricht, verlagert wird, die Klappe automatisch umklappt, und wenn die Trennwand von einer Position, die der zweiten Konfiguration der Trennvorrichtung entspricht, in eine Position, die der ersten Konfiguration der Trennvorrichtung entspricht, verlagert wird, die Klappe sich automatisch in der Verlängerung der Trennwand erstreckt.

6. Fahrzeug nach einem der vorhergehenden Ansprüche, **dadurch gekennzeichnet, dass** es ein erstes Drehverbindungsmittel zur Drehung um eine erste Achse (Z1) umfasst, wobei die Trennwand durch eine Drehung um die erste Achse zwischen der ersten Konfiguration und der zweiten Konfiguration nach vorn bewegbar ist, und dadurch, dass es ein zweites Drehverbindungsmittel zur Drehung um eine zweite Achse (Z2) umfasst, wobei die Klappe durch eine Drehung um die zweite Achse zwischen der ersten Konfiguration und der zweiten Konfiguration bewegbar ist, wobei die erste Achse und die zweite Achse dazu bestimmt sind, parallel zu einer vertikalen Achse (Z) eines Fahrzeugs ausgerichtet zu werden, wobei die Trennwand geeignet ist, um eine viertel Umdrehung in einer ersten Drehrichtung zu schwenken, wenn die Trennvorrichtung aus der ersten Konfiguration in die zweite Konfiguration übergeht, und dadurch, dass die Klappe geeignet ist, um eine viertel Umdrehung in einer zweiten Drehrichtung zu schwenken, wenn die Trennvorrichtung aus der ersten Konfiguration in die zweite Konfiguration übergeht, wobei die zweite Drehrichtung entgegengesetzt zur ersten Drehrichtung ist.

7. Fahrzeug nach den Ansprüchen 5 und 6, **dadurch gekennzeichnet, dass** der Synchronisationsmechanismus (60) eine Stange (61), die sich im Wesentlichen parallel zu der Trennwand erstreckt, ein drittes Drehverbindungsmittel zur Drehung um eine dritte Achse (Z3) und ein viertes Drehverbindungsmittel zur Drehung um eine vierte Achse (Z4) umfasst, wobei die dritte Achse und die vierte Achse dazu bestimmt sind, parallel zu einer vertikalen Achse (Z) eines Fahrzeugs ausgerichtet zu werden, wobei die Stange ein erstes Ende (64), das über das dritte Drehverbindungsmittel mit der Klappe verbunden ist, und ein zweites Ende (65), das über das vierte Drehverbindungsmittel mit dem Gestell verbunden ist, umfasst.

8. Fahrzeug nach den Ansprüchen 5 und 6, **dadurch gekennzeichnet, dass** der Synchronisationsmechanismus (70) ein erstes Antriebsrad (71), das am Gestell befestigt ist, ein zweites Antriebsrad (72), das an der Klappe befestigt ist, wobei das erste Antriebsrad um die erste Achse (Z1) herum angeordnet ist und das zweite Antriebsrad um die zweite Achse (Z2) herum angeordnet ist, und einen Übertragungsring (73), insbesondere einen Riemen oder eine Kette, der mit dem ersten Antriebsrad und dem zweiten Antriebsrad zusammenwirkt, umfasst.

9. Fahrzeug nach Anspruch 5, **dadurch gekennzeichnet, dass** der Synchronisationsmechanismus (80) ein Seil (81) umfasst, das ein erstes Ende (83), das am Gestell befestigt ist oder dazu bestimmt ist, an einer Karosserie eines Fahrzeugs befestigt zu werden, und ein zweites Ende (84), das an der Klappe befestigt ist, umfasst, und dadurch, dass der Synchronisationsmechanismus ein Rückstellmittel (82) umfasst, wobei die Spannung des Seils geeignet ist, ein Schwenken der Klappe in einer ersten Drehrichtung zu bewirken, wobei das Rückstellmittel geeignet ist, ein Schwenken der Klappe in einer zweiten Drehrichtung zu bewirken, die zur ersten Drehrichtung entgegengesetzt ist.

## Claims

1. Motor vehicle (1) comprising a loading space (3), a passenger compartment (4) in which is disposed a driver seat (7) and a passenger seat (8), and a separation device (2), the separation device comprising a frame (20), a partition (30) that is able to move with respect to the frame, and a flap (40) that is able to move with respect to the partition, the frame being intended to be fastened to a bodyshell of a vehicle, the separation device being able to move between a first configuration (C1) and a second configuration (C2),
**characterized in that**
the partition and the flap extend side by side and parallel to a first plane (P1) when the separation device is in its first configuration, said first plane being intended to be oriented perpendicular to a longitudinal axis (X) of the vehicle so as to separate the passenger compartment (4) from the loading space, the partition extending parallel to a second plane (P2) when the separation device is in its second configuration, said second plane being intended to extend perpendicular to a transverse axis (Y) of the vehicle and along a lateral side of the driver seat (7) so as to cause at least a part of the passenger compartment to communicate with the loading space, the flap being stowed so as to clear a field of view of a driver when the separation device is in its second configuration.

2. Vehicle according to the preceding claim, **characterized in that** the flap (40) is stowed so as to clear a field of view of a lateral rear-view mirror (9) of a vehicle when the separation device is in its second configuration (C2).

3. Vehicle according to either of the preceding claims, **characterized in that** the frame (20) comprises a fixed partition (21), the fixed partition being intended to extend in a plane oriented perpendicular to a longitudinal axis (X) of a vehicle, the fixed partition being intended to be positioned behind the driver seat (7) of a vehicle.

4. Vehicle according to one of the preceding claims, **characterized in that** the flap (40) is intended to be oriented perpendicular to a longitudinal axis (X) of a vehicle when the separation device is in its second configuration (C2), and when the separation device is in any intermediate configuration between its first configuration (C1) and its second configuration (C2).

5. Vehicle according to one of the preceding claims, **characterized in that** it comprises a synchronization mechanism (60, 70, 80) configured such that when the partition is moved from a position corresponding to the first configuration of the separation device towards a position corresponding to the second configuration of the separation device, the flap is stowed automatically, and when the partition is moved from a position corresponding to the second configuration of the separation device towards a position corresponding to the first configuration of the separation device, the flap extends automatically in the continuation of the partition.

6. Vehicle according to one of the preceding claims, **characterized in that** it comprises a first means for connection in rotation about a first axis (Z1), the partition being able to move forwards between the first configuration and the second configuration through a rotation about the first axis, and **in that** it comprises a second means for connection in rotation about a second axis (Z2), the flap being able to move between the first configuration and the second configuration through a rotation about the second axis, the first axis and the second axis being intended to be oriented parallel to a vertical axis (Z) of a vehicle, the partition being able to pivot by a quarter-turn in a first rotation direction when the separation device passes from the first configuration to the second configuration, and **in that** the flap is able to pivot by a quarter-turn in a second rotation direction when the separation device passes from the first configuration to the second configuration, the second rotation direction being opposite to the first rotation direction.

7. Vehicle according to Claims 5 and 6, **characterized in that** the synchronization mechanism (60) comprises a rod (61) extending substantially parallel to the partition, a third means for connection in rotation about a third axis (Z3) and a fourth means for connection in rotation about a fourth axis (Z4), the third axis and the fourth axis being intended to be oriented parallel to a vertical axis (Z) of a vehicle, the rod comprising a first end (64) connected to the flap by the third means for connection in rotation and a second end (65) connected to the frame by the fourth means for connection in rotation.

8. Vehicle according to Claims 5 and 6, **characterized in that** the synchronization mechanism (70) comprises a first drive wheel (71) fastened to the frame, a second drive wheel (72) fastened to the flap, the first drive wheel being arranged around the first axis (Z1) and the second drive wheel being arranged around the second axis (Z2), and a transmission ring (73), in particular a belt or a chain, cooperating with the first drive wheel and the second drive wheel.

9. Vehicle according to Claim 5, **characterized in that** the synchronization mechanism (80) comprises a cable (81) comprising a first end (83) fastened to the frame or intended to be fastened to a bodyshell of a vehicle and a second end (84) fastened to the flap, and **in that** the synchronization mechanism comprises a return means (82), the tension of the cable being able to cause the flap to pivot in a first rotation direction, the return means being able to cause the flap to pivot in a second rotation direction, which is opposite to the first rotation direction.
